# EUROPÄISCHE PATENTSCHRIFT

(11) **EP 0 903 077 B1**
(45) Veröffentlichungstag und Bekanntmachung des Hinweises auf die Patenterteilung: **20.03.2002**
(21) Anmeldenummer: 98117422.0
(22) Anmeldetag: 15.09.1998
(51) Int. Cl.: A01D 89/00

(54) **Aufnahmeeinheit für Erntegut**
Pick-up for field crops
Ramasseur pour recoltes

(30) Priorität: 15.09.1997 DE 19740589
(43) Veröffentlichungstag der Anmeldung: 24.03.1999
(73) Patentinhaber: Freitag, Alois, 59269 Beckum-Neubeckum (DE)
(72) Erfinder: Freitag, Alois, 59269 Beckum-Neubeckum (DE)
(74) Vertreter: Schulze Horn & Partner GbR

(56) Entgegenhaltungen:
- FR-A- 1 192 976
- US-A- 2 527 887
- US-A- 2 627 158
- US-A- 3 523 412

## Beschreibung

Die vorliegende Erfindung betrifft eine Aufnahmeeinheit für Erntegut, insbesondere zur Verwendung an Ballenpressen oder Ladewagen, mit einer drehantreibbaren Aufnahmetrommel und mit einem Abstreifer.

Eine Aufnahmeeinheit der vorstehend genannten Art ist aus US-A-3 523 412 bekannt. Die dort beschriebene Aufnahmetrommel weist einen Mantel auf, aus dem mehrere Zinken nach außen vorragen, die fest mit dem übrigen Teil der Trommel verbunden sind, wobei der Abstreifer kammartig mit Durchtrittsschlitzen für die Zinken ausgebildet ist und eine Oberseite mit einer im Querschnitt konvexen Wölbung aufweist und im Bereich seiner Vorderkante tangential zum Mantel verläuft. Bei dieser bekannten Aufnahmeeinheit sind die Zinken entweder starr am Außenumfang der Trommel befestigt oder mit einem Federfuß in Eintiefungen im Trommelmantel angebracht. Dabei sind die Zinken in jedem Fall absolut geradlinig ausgeführt und laufen exakt in Radialrichtung der Trommel, d.h. sie bilden mit dem Trommelmantel einen rechten Winkel. Abweichungen von diesem Verlauf können bei den starren Zinken nur in einem Schadensfall auftreten; bei den Federzinken tritt eine solche Abweichung nur auf, wenn starke äußere Kräfte auf die Zinkenspitze wirken, z.B. durch auf dem abzuerntenden Feld liegende Steine. Der rechtwinklige Verlauf der Zinken relativ zum Trommelmantel hat zwangsläufig zur Folge, daß es beim Durchtritt der Zinken durch den Abstreifer zu Abweichungen von einem an sich wünschenswerten rechten Winkel kommt; es ergibt sich nämlich beim Durchtritt der Zinken durch den Abstreifer vielmehr ein zunehmend spitzer Winkel. Dieser spitze Winkel erschwert und behindert das Abstreifen des von den Zinken über den Abstreifer beförderten Erntegutes und verursacht außerdem in einem gewissen Umfange ein Mitnehmen von Erntegut durch die Durchtrittsschlitze für die Zinken hindurch. Dieses durch die Durchtrittsschlitze hindurchgeförderte Erntegut ist für die Ernte verloren und fällt in der Regel hinter der Aufnahmetrommel wieder auf den Boden. Im ungünstigsten Fall kann das mitgenommene Erntegut auch zu Funktionsstörungen der Aufnahmetrommel führen, wenn es unerwünschterweise in Antriebselemente für die Aufnahmetrommel gerät oder sich um die Trommel wickelt. Der Abstreifer besteht hier aus einer Reihe von parallelen, relativ langen Zungen, was dazu führt, daß jede Zunge für sich ein relativ labiles, insbesondere leicht verbiegbares Teil des Abstreifers darstellt.

Eine weitere Aufnahmeeinheit ist aus FR-A-1 192 976 bekannt. Dieses Dokument zeigt eine Aufnahmetrommel, bei der die Zinken entweder gradlinig oder mit einer über ihre Länge gleichmäßigen Krümmung ausgebildet sind. Mit beiden Ausführungen der Zinken wird eine nur begrenzte Förderwirkung im Hinblick auf das aufzunehmende Erntegut erreicht, weil die Zinken das Erntegut insbesondere mit ihrem radial äußeren Endbereich erfassen, der hier aufgrund der beschriebenen Gestaltung der Zinken keinen optimalen Eingriff mit dem Erntegut bietet. Bei allen dargelegten Ausführungen der Aufnahmetrommel besitzt diese keinen sich mit den Zinken drehenden Mantel, sondern in allen Ausführungen einen feststehenden, mit dem Abstreifer einstückigen Mantel, wobei der Mantel und der Abstreifer über einen sehr großen Bereich mit Durchtrittsschlitzen für die Zinken ausgeführt sein müssen. Hierdurch werden der Mantel und der Abstreifer relativ labil, weil sie im Bereich der Durchtrittsschlitze nicht unterstützt oder gehaltert werden können. Auf diese Weise ist es sehr leicht möglich, daß das von den Zinken transportierte Erntegut den Mantel und den Abstreifer aus seiner Soll-Lage entfernt und diesen soweit verformt, daß die gewünschte rechtwinklige Ausrichtung der Zinken zum Abstreifer im Betrieb der Aufnahmetrommel nicht mehr gewährleistet ist.

Für die vorliegende Erfindung stellt sich die Aufgabe, eine Aufnameeinheit der eingangs genannten Art zu schaffen, die eine intensive Förderwirkung besitzt, die eine Mitnahme von Erntegut durch die Durchtrittsschlitze des Abstreifers hindurch vermeidet und die zugleich eine stabile Konstruktion darstellt, bei der nicht die Gefahr besteht, daß es im Betrieb zu Deformationen und dadurch verursachten Funktionsbeeinträchtigungen kommt.

Die Lösung dieser Aufgabe gelingt erfindungsgemäß durch eine Aufnahmeeinheit der eingangs genannten Art, die die folgenden Merkmale aufweist:
- die Aufnahmetrommel weist einen Mantel auf, aus dem mehrere Zinken nach außen vorragen, die fest mit dem übrigen Teil der Trommel verbunden sind,
- der Abstreifer ist kammartig mit Durchtrittsschlitzen für die Zinken ausgebildet und weist eine Oberseite mit einer im Querschnitt konvexen Wölbung auf,
- bei Ausführung der Aufnahmetrommel mit einem mitdrehenden Mantel verläuft der Abstreifer im Bereich einer Vorderkante tangential zum Mantel,
- die Zinken weisen relativ zu dem übrigen Teil der Trommel eine gegen die Trommeldrehrichtung weisende Neigung auf,
- die Neigung der Zinken und die Wölbung des Abstreifers sind so aufeinander abgestimmt, daß beim Durchtritt der Zinken durch den Abstreifer bei sich drehender Trommel die Längsrichtung der Zinken und die Fläche des Abstreifers einen im wesentlichen rechten Winkel bilden,
- die Zinken weisen ausgehend vom Trommelmantel zunächst einen geradlinigen Bereich und anschließend in ihrem äußeren Endbereich eine in Trommeldrehrichtung weisende Abbiegung oder Abwinklung auf,
- die Wölbung der Oberseite des Abstreifers wird von seiner Vorderkante in Richtung von der Trommel weg stärker,
- der äußere Endbereich der Zinken ist gegen den geradlinigen Bereich um einen Winkel zwischen 5 und 20°, vorzugsweise zwischen 10 und 15°, abgebogen oder abgewinkelt und
- der Abstreifer ist an seinen die Durchtrittsschlitze begrenzenden Kanten mit nach oben weisenden Randstegen ausgebildet.

Zum einen sind bei der erfindungsgemäßen Aufnahmeeinheit die Zinken von einer einfachen Form, da sie lediglich einen gradlinigen, größeren Abschnitt und einen kürzeren, abgebogenen oder abgewinkelten Endbereich aufweisen. Zugleich sorgt dieser abgebogene oder abgewinkelte Endbereich für einen optimalen Eingriff der Zinken in das aufzunehmende Erntegut. Gleichzeitig bleibt aber gewährleistet, daß die Zinken und der Abstreifer stets einen im wesentlichen rechten Winkel miteinander bilden, so daß ein Hindurchziehen von Erntegut durch die Durchtrittsschlitze nicht auftritt. Weiterhin liegt ein Vorteil der erfindungsgemäßen Aufnahmeeinheit darin, daß die Zinken sehr weit aus dem Mantel vorragen, so daß sie eine sehr intensive Förderwirkung auf dem Weg vom Untergrund nach oben auf das Erntegut ausüben; die Förderwirkung läßt erst merklich nach, wenn das Erntegut schon ausreichend weit auf den Abstreifer befördert ist, wo es von einer weiteren Fördereinrichtung, z.B. der zugehörigen Erntemaschine, erfaßt werden kann. Schließlich sorgen die Randstege an den beiden Seiten der Durchtrittsschlitze des Abstreifers für eine extrem hohe Stabilität, die dafür sorgt, daß sich die zungenförmigen Teile des Abstreifers auch bei hoher Belastung nicht deformieren. Damit bleibt das gewünschte Zusammenwirken zwischen den Zinken und dem Abstreifer auch bei hohen mechanischen Belastungen der Aufnahmeeinheit stets erhalten.

Eine gute Kombination von wirksamer Erntegutaufnahme vom Boden und störungsfreiem Abstreifen des Erntegutes auf dem Abstreifer wird dadurch erreicht, daß die Längsrichtung der Zinken mit der Radialrichtung der Trommel einen Winkel zwischen 25 und 45°, vorzugsweise zwischen 30 und 40°, bildet.

Um die Vorderkante des Abstreifers möglichst nahe an den Mantel der Aufnahmetrommel legen zu können und so eine Mitnahme von aufzunehmendem Erntegut zwischen dem Mantel und dem Abstreifer zu vermeiden, wird vorgeschlagen, daß der Trommelmantel über seinen Umfang verteilt mehrere in Trommellängsrichtung laufende Nuten aufweist und daß die Zinken jeweils am oder nahe dem Nutgrund mittels eines Zinkenfußes festgelegt sind. Auf diese Weise werden alle Befestigungsmittel vertieft untergebracht, so daß sie nicht bis in den Bereich des Trommelmantels reichen.

Um Beschädigungen der Zinken, insbesondere bleibende Verbiegungen oder Brüche, oder Schäden am Abstreifer oder anderen Teilen der Aufnahmeeinheit zu vermeiden, sind die Zinken zweckmäßig als Federzinken augebildet, wozu jeweils im Anschluß an den Zinkenfuß ein schraubenförmig gewundener Zinkenabschnitt vorgesehen ist, der innerhalb der Nut liegt. Bei dieser Ausführung können die Zinken federnd ausweichen, z.B. bei einem Auflaufen auf harten Boden oder auf Steine oder bei einer Überlastung durch eine zu große Menge von Erntegut. Dabei liegen vorteilhaft auch die für die Erzeugung der Federwirkung der Zinken erforderlichen Mittel, hier jeweils der schraubenförmig gewundene Zinkenabschnitt, innerhalb der Nut, so daß auch hier keine Teile, abgesehen von den Zinken selbst, über den Mantel der Aufnahmetrommel nach außen vorragen.

Zur Vereinfachung der Herstellung der Aufnahmeeinheit und zur Erzielung einer guten Stabilität und damit hohen Betriebssicherheit ist vorgesehen, daß die Nuten durch nach außen offene U-Profile gebildet sind. Derartige U-Profile sind gängige Bauelemente, wobei sie für die Aufnahmeeinheit vorzugsweise aus Stahl bestehen.

Um die einzelnen Nuten zu einem tragenden Gebilde miteinander zu verbinden, ist vorgesehen, daß in Längsrichtung der Aufnahmetrommel mehrere mehrarmige Naben angeordnet sind, wobei jeweils ein Nabenarm zur zum Trommelinneren weisenden Unterseite einer der Nuten läuft. Auf diese Weise wird eine besonders belastbare Konstruktion der Aufnahmetrommel bei geringem Gewicht erreicht, weil die Nuten jeweils dort gezielt unterstützt werden, wo von den Zinken die im Betrieb der Aufnahmeeinheit wirkenden Kräfte eingeleitet werden.

Weiter wird vorgeschlagen, daß der Trommelmantel außerhalb der Nuten durch mehrere Mantelsegmente gebildet ist, wobei je ein Mantelsegment zwischen zwei benachbarten U-Profilen verläuft und an seinen Längskanten mit den freien Schenkelenden der U-Profile verbunden ist. Diese Mantelsegmente lassen sich relativ einfach, z.B. durch Rundwalzen oder durch mehrfaches Abkanten mit kleinem Abkantwinkel, herstellen. Weiterhin genügt für die Mantelsegmente eine relativ geringe Materialstärke, weil sie im Betrieb der Aufnahmeeinheit keine besonderen Kräfte aufnehmen müssen. Als Material für die Mantelsegmente wird bevorzugt Stahlblech verwendet, wobei in diesem Fall die Verbindung mit den U-Profilen auf einfache Weise durch Verschweißung erfolgen kann. Bedarfsweise können die Mantelsegmente auch lösbar mit dem übrigen Teil der Aufnahmetrommel verbunden sein, wenn eine Zugangsmöglichkeit zum Inneren der Trommel gewünscht wird. Dafür müssen nicht alle Mantelsegmente lösbar sein; bei geringeren Durchmessern der Aufnahmetrommel genügt es, wenn ein einzelnes Mantelsegment abgenommen werden kann. Auch können die Mantelsegmente so konturiert sein, daß sie die Nuten im Bereich zwischen je zwei benachbarten Zinken verdecken.

Eine zu der zuletzt beschriebenen Ausführung der Aufnahmeeinheit alternative Ausgestaltung schlägt vor, daß der Trommelmantel feststehend und mit Durchlaufschlitzen für die Zinken ausgebildet ist. Bei dieser Ausgestaltung der Aufnahmeeinheit müssen lediglich die Zinken sowie die die Zinken tragenden Teile der Aufnahmetrommel in Drehung versetzt werden; der Trommelmantel selbst dreht sich bei dieser Ausführung der Aufnahmeeinheit nicht. Die Durchlaufschlitze für die Zinken sind deshalb selbstverständlich über den vollen Umfang des Trommelmantels vorgesehen. Die Halterung und Verbindung der einzelnen Teile des Trommelmantels erfolgt zweckmäßig an Stellen, die außerhalb des Bewegungsbereiches der Zinken liegen.

Eine Weiterbildung der zuletzt beschriebenen Ausführung der Aufnahmeeinheit schlägt vor, daß der Trommelmantel mit dem Abstreifer verbunden oder einstückig ausgeführt ist und sich von dem Abstreifer ausgehend gegen die Trommeldrehrichtung über einen Umfangswinkel von mindestens 180° erstreckt. Auf diese Weise wird eine besonders steife und somit stabile Anordnung von Trommelmantel und Abstreifer erreicht, was einen dauerhaft zuverlässigen Betrieb sicherstellt. Gleichzeitig wird der Übergang des geförderten Erntegutes von der Aufnahmetrommel auf den Abstreifer verbessert, denn es kann nun auf besonders einfache Weise ein stetiger Übergang hergestellt werden, weil hier kein sich unterhalb der Vorderkante des Abstreifers drehender Trommelmantel vorhanden ist.

Die erfindungsgemäße Aufnahmeeinheit kann an unterschiedlichen Erntemaschinen eingesetzt werden. Um dabei die Aufnahmeeinheit an individuelle technische Gegebenheiten seitens der Erntemaschinen anpassen zu können, wird vorgeschlagen, daß der Abstreifer um seine Vorderkante verschwenkbar und an seinem trommelfernen Ende höhenverstellbar und fixierbar gehaltert ist. Auf diese Weise kann insbesondere die Länge des Erntegut-Förderweges der Zinken entlang der Oberseite des Abstreifers verändert werden. Wenn der Abstreifer nach oben verschwenkt ist, tauchen die Zinken früher nach unten ab, was einen kürzeren Förderweg ergibt; umgekehrt wird der Förderweg länger, wenn der Abstreifer nach unten verschwenkt ist, weil dann die Zinken erst später durch den Abstreifer nach unten abtauchen.

Um abgenutzte oder beschädigte Zinken möglichst einfach durch neue Zinken ersetzen zu können, ist vorgesehen, daß die Zinken lösbar mit der übrigen Aufnahmetrommel verbunden, insbesondere verschraubt, sind. Zusätzlich ermöglicht diese Ausgestaltung die Anpassung der Aufnahmeeinheit an unterschiedliche Verwendungszwecke durch Anbringung zweckentsprechend ausgewählter Zinken bei der Herstellung der Aufnahmeeinheit. Der übrige Teil der Aufnahmetrommel kann dann in gleicher Form für unterschiedliche Ausführungen der Aufnahmeeinheit verwendet werden.

Eine weitere Maßnahme zur Anpassung der Aufnahmeeinheit an unterschiedliche Einsatzzwecke und -bedingungen und zur Optimierung der Aufnahme und des Abstreifens des Erntegutes besteht darin, daß die Zinken in ihrer Neigung verstellbar und relativ zur übrigen Aufnahmetrommel in einer gewünschten Neigung festlegbar sind. Hierdurch kann beispielsweise durch Versuche die Neigung der Zinken optimiert und dann in der optimalen Einstellung festgelegt werden. In konkreter Ausführung kann hierzu beispielsweise der Zinkenfuß auf einem gesonderten Zinkenhalter befestigt sein, der seinerseits verschwenkbar an der übrigen Aufnahmetrommel gehaltert ist. Zwischen dem Zinkenhalter und der übrigen Aufnahmetrommel sind dann zweckmäßig Feststellmittel, z.B. Klemmschrauben oder dergleichen bekannte Mittel, vorgesehen.

Eine andere Ausführung der Aufnahmeeinheit, die ebenfalls eine gezielte Einstellung des Verlaufs der Zinken relativ zur übrigen Aufnahmetrommel gestattet, ist dadurch gekennzeichnet, daß in Längsrichtung der Aufnahmetrommel gesehen die Zinken einer Zinkenreihe jeweils auf einem gemeinsamen Zinkenträger befestigt sind, der um seine Längsachse verschwenkbar und in gewünschten Stellungen relativ zur übrigen Aufnahmetrommel festlegbar ist. Der besondere Vorteil dieser Ausführung der Aufnahmeeinheit besteht darin, daß alle Zinken zumindest einer Zinkenreihe in Längsrichtung der Trommel mit einem Handgriff in ihrer Ausrichtung relativ zur übrigen Trommel verstellt und in einer gewünschten Stellung festgelegt werden können. Dies macht die Einstellarbeiten wesentlich einfacher und vor allem zeitsparender. Im Betrieb der Trommel behalten dann die Zinken die einmal eingestellte und festgelegte Ausrichtung bei.

Eine weitere Arbeitserleichterung und Zeiteinsparung kann dadurch erreicht werden, daß alle Zinkenträger mittels mindestens je eines Hebelarmes mit mindestens einem gemeinsamen zentralen Verstellelement verbunden sind, das relativ zur übrigen Trommel begrenzt verdrehbar und in gewünschten Stellungen festlegbar ist.

Das zuvor erwähnte Verstellelement ist bevorzugt mindestens eine Scheibe oder ein Ring, die/der konzentrisch in der Trommel gelagert ist. Ein so ausgeführtes Verstellelement ist einfach herstellbar und problemlos in die Trommel integrierbar sowie zwecks Verstellung der Richtung der Zinken auch einfach betätigbar, z.B. durch ein von außen in die Trommel eingeführtes Hilfswerkzeug.

Schließlich wird zur Verbesserung der Aufnahme und Weiterförderung des Erntegutes durch die Zinken der Aufnahmetrommel vorgeschlagen, daß vor und über der Aufnahmetrommel in einem Abstand von den freien Enden der Zinken eine von aufgenommenem Erntegut auslenkbare, vorzugsweise flexible Abdeckung angeordnet ist. Diese Abdeckung wirkt durch ihr Gewicht oder unter dem Einfluß zusätzlicher Vorbelastungsmittel auf das von der Aufnahmetrommel nach oben geförderte Erntegut, wodurch das Erntegut im Arbeitsbereich der Zinken gehalten wird. Gleichzeitig ist aber ein Stau des Erntegutes ausgeschlossen, weil bei Zuführung von größeren Mengen an Erntegut die Abdeckung ausweichen kann.

Ausführungsbeispiele der Erfindung werden im folgenden anhand einer Zeichnung erläutert. Die Figuren der Zeichnung zeigen:
- Figur 1: eine Aufnahmeeinheit in einer ersten Ausführung in einem schematisierten Querschnitt,
- Figur 2: die Aufnahmeeinheit in einer zweiten Ausführung ebenfalls in einem schematisierten Querschnitt,
- Figur 3: die Aufnahmeeinheit in einer dritten Ausführung in einem schematisierten Teil-Querschnitt und
- Figur 4: die Aufnahmeeinheit in einer vierten Ausführung, wieder in einem schematisierten Querschnitt.

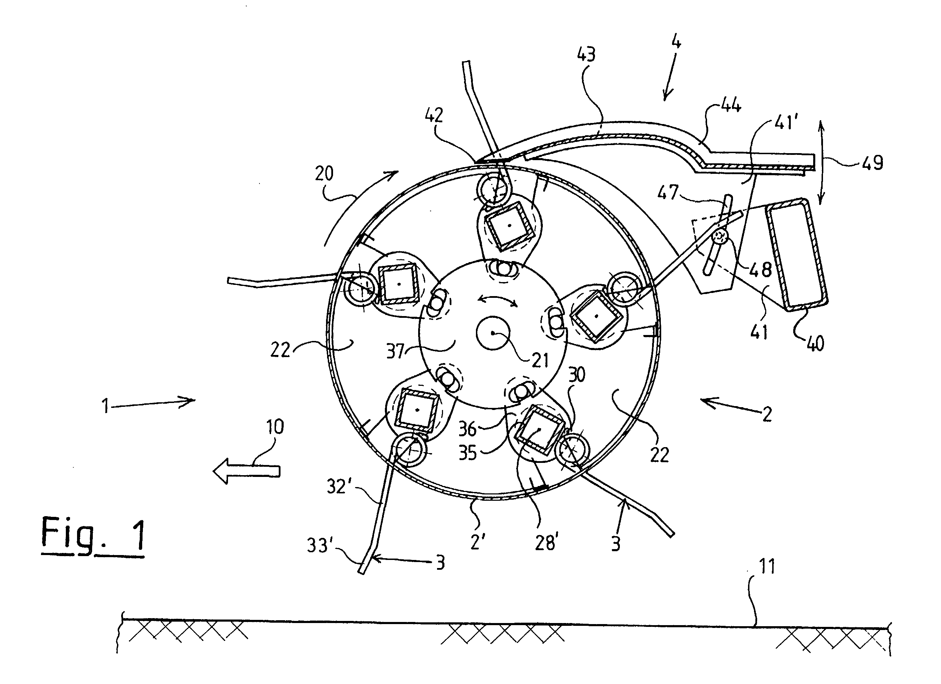

Figur 1 der Zeichnung zeigt eine Aufnahmeeinheit 1, bei der eine Aufnahmetrommel 2 mit vorragenden Zinken 3 und ein damit zusammenwirkender Abstreifer 4 die wesentlichen Teile bilden. Die Aufnahmeeinheit 1 kann beispielsweise Teil einer Ballenpresse oder eines Ladewagens sein, mit der/dem z.B. Stroh oder Heu aufgenommen werden kann.

Im Betrieb der Aufnahmeeinheit 1 rotiert die Aufnahmetrommel 2 in Richtung des Pfeiles 20 um ihre Längsmittelachse 21. An ihren Stirnenden ist die Aufnahmetrommel 2 in nicht dargestellter Weise gelagert und gehaltert sowie zumindest an einer Stirnseite mit einem Drehantrieb verbunden. Weiterhin bewegt sich die Aufnahmeeinheit 1 während des Betriebes insgesamt in Richtung des Pfeiles 10 über die Oberfläche 11 z.B. eines Feldes. Dabei wird auf der Oberfläche 11 liegendes, aufzunehmendes Erntegut, wie ausgedroschenes Stroh oder trockenes Gras, von den Zinken 3 erfaßt und nach oben und hinten bewegt und schließlich im Bereich des Abstreifers 4 von den Zinken wieder getrennt. Vom in der Zeichnung rechts liegenden Endbereich des Abstreifers 4 transportieren weitere, hier nicht dargestellte Fördermittel das Erntegut weiter, z.B. auf einen Ladewagen, wie dies an sich bekannt ist.

An der Aufnahmetrommel 2 ist ein im wesentlichen geschlossener, zylindrischer Trommelmantel 26 vorhanden, der mit relativ kleinen, schlitzförmigen Durchbrechungen begrenzter Länge in Umfangsrichtung für den Durchtritt der Zinken 3 versehen ist. Der Trommelmantel 26 wird von mehreren scheibenförmigen Naben 22 getragen, von denen hier eine im Hintergrund im Inneren der Aufnahmetrommel 2 sichtbar ist. Im Bereich jedes Zinken 3 besitzen die Naben 22 jeweils eine Durchbrechung, in denen ein in Längsrichtung der Aufnahmetrommel 2 durchlaufender Zinkenträger 35 für jeweils mehrere Zinken 3 gelagert ist. Jeder Zinkenträger 35 ist dabei um seine Längsmittelachse 28' verschwenkbar. An jedem Zinkenträger 35 sind mehrere Zinken 3 befestigt, vorzugsweise mittels einer lösbaren Verschraubung. Die Zinkenträger 35 sind im dargestellten Ausführungsbeispiel als im Querschnitt quadratische Hohlprofile ausgeführt, wobei die Zinken 3 jeweils auf einer der Außenseiten der Zinkenträger 35 angebracht sind.

Im Zentrum der Aufnahmetrommel 2 ist ein zentrales Verstellelement 37 angeordnet, das durch mindestens eine Scheibe oder einen Ring gebildet ist. Dieses Verstellelement 37 ist, wie durch den Doppelpfeil angedeutet ist, in begrenztem Umfang um seinen Mittelpunkt in Umfangsrichtung der Aufnahmetrommel 2 verstellbar. Zwischen dem Verstellelement 37 und jedem Zinkenträger 35 ist jeweils ein Hebelarm 36 angebracht. Die Hebelarme 36 sind jeweils mit dem zugehörigen Zinkenträger 35 fest verbunden, während die Verbindung zwischen dem Hebelarm 36 und dem zentralen Verstellelement 37 gelenkig ist. Auf diese Weise wird erreicht, daß jede Verdrehung des zentralen Verstellelements 37 zu einer entgegengesetzten Verschwenkung der Zinkenträger 35 um deren Längsmittelachsen 28' führt. Hierdurch werden sämtliche Zinken 3 gleichzeitig durch die Verstellung des zentralen Verstellelements 37 in ihrer Ausrichtung relativ zum Trommelmantel 2' verstellt. Sobald eine gewünschte Ausrichtung der Zinken 3 erreicht ist, kann diese durch Arretierung des zentralen Verstellelements 37 festgelegt werden. Eine Verstellung der Ausrichtung der Zinken 3 erfolgt zweckmäßig insbesondere dann, wenn sich nach einer gewissen Einsatzzeit die Ausrichtung der Zinken 3 durch stetige einseitige mechanische Belastung in unerwünschter Weise verändert hat.

Die Zinken 3 sind außerhalb des Trommelmantels 2' zunächst mit einem geradlinigen, eine Neigung gegen die Trommeldrehrichtung 20 aufweisenden Bereich 32' ausgeführt, der in einen in Trommeldrehrichtung 20 abgebogenen oder abgewinkelten, in sich ebenfalls geradlinigen Endbereich 33' übergeht.

Der Abstreifer 4 besitzt eine konvex gewölbte Oberseite und ist kammartig ausgebildet und besitzt eine Anzahl von Durchtrittsschlitzen 43, die deckungsgleich mit den Umfangslinien sind, auf denen die Zinken 3 umlaufen. Bei Drehung der Aufnahmetrommel 2 um ihre Achse 21 im Sinn des Pfeiles 20 treten die Zinken 3 jeweils an der Vorderkante 42 des Abstreifers 4 in dessen Durchtrittsschlitze 43 ein und wandern durch diese hindurch, wobei das aufgenommene Erntegut dann hier von den Zinken 3 wieder abgestreift wird. Für diese Abstreiffunktion ist es wesentlich, daß zwischen dem über den Abstreifer 4 nach oben vorragenden Teil der Zinken 3 und der Oberfläche des Abstreifers 4 möglichst ein rechter Winkel vorliegt. Bei der Aufnahmeeinheit 1 gemäß der Zeichnung sind die Neigung und der Verlauf der Zinken 3 einerseits und die konvexe Wölbung der Oberseite des Abstreifers 4 andererseits so aufeinander abgestimmt, daß unabhängig von der jeweiligen Drehstellung der Aufnahmetrommel 2 immer ein im wesentlichen rechter Winkel zwischen dem über den Abstreifer 4 nach oben vorragenden Teil der Zinken 3 und der Oberfläche des Abstreifers 4 erhalten bleibt. Gleichzeitig wird bei der Drehung der Aufnahmetrommel 2 der über die Oberfläche des Abstreifers 4 vorragende Teil der Zinken 3 stetig kürzer, was einer Rückzugsbewegung der Zinken 3 aus dem Erntegut entspricht.

Zur Halterung des Abstreifers 4 ist ein parallel zur Aufnehmetrommel 2 verlaufender, hier als Rechteck-Hohlprofil ausgebildeter Träger 40 vorgesehen, von dem aus sich mehrere Stützen 41 unter den Abstreifer 4 erstrecken, um ihn zu halten. Der Träger 40 kann in Anpassung an die maschinenseitigen Gegebenheiten in Form und/oder Anordnung abgewandelt werden.

Bei dem Abstreifer 4 ist wesentlich, daß dessen Oberseite über ihren Verlauf von der Vorderkante 42 zur in der Zeichnung rechts liegenden Hinterkante eine zunehmende Krümmung aufweist. In dem vorderen, sich an die Vorderkante 42 anschließenden Bereich ist dabei die Krümmung flacher, während sie in einem daran anschließenden, weiter hinten liegenden Bereich stärker wird. Der ganz hinten, d.h. in der Zeichnung ganz rechts liegende, nicht mehr von den Zinken 3 überstrichene Teil des Abstreifers 4 ist dann wieder eben ausgeführt. Die über den Verlauf des Abstreifers 4 unterschiedliche Wölbung ist so ausgeführt, daß sich bei Durchtritt der Zinken 3 durch die Durchtrittsschlitze 43 im Abstreifer 4 zwischen dessen Oberseite und der Längsachse der Zinken 3 stets ein möglichst nahe bei 90° liegender Winkel im Schnittpunkt der beiden Teile ergibt. Der Übergang der Krümmung des Abstreifers 4 von einer schwächeren zu einer stärkeren Krümmung liegt vorzugsweise dort, wo die Abbiegung oder Abwinklung der Zinken 3 sich mit dem Abstreifer 4 schneidet.

Weiterhin ist bei dem Ausführungsbeispiel der Aufnahmeeinheit 1 gemäß Figur 1 der Abstreifer 4 verstellbar ausgeführt. Hierzu ist der Abstreifer 4 unterseitig mit einem abstreiferseitigen Stützenteil 41' ausgeführt, das mit dem trägerseitigen Stützenteil 41, das an dem Träger 40 fest angebracht ist, verstellbar verbunden ist. Hierzu ist in dem abstreiferseitigen Stützenteil 41' ein bogenförmiges Langloch 47 vorgesehen, durch das eine Feststellschraube 48 verläuft, die ihrerseits mit dem trägerseitigen Stützenteil 41 verbunden ist. Das bogenförmige Langloch 47 ist so ausgeführt, daß sich eine Verschwenkbarkeit des Abstreifers 4 um seine Vorderkante 42 ergibt, wie dies durch den Verstellpfeil 49 dargestellt ist. Die Vorderkante 42 des Abstreifers 4 bleibt stets möglichst nahe an der äußeren Umfangsfläche des Trommelmantels 2'; an seinem hinteren, in der Zeichnung rechts liegenden Ende kann dann der Abstreifer 4 in unterschiedliche Stellungen gebracht werden. In einer gewünschten Stellung kann dann durch Anziehen der Schraube 48 die Position des Abstreifers 4 fixiert werden. Durch diese Verstellbarkeit des Abstreifers 4 kann der Förderweg beeinflußt werden, den das Erntegut von den Zinken 3 erfährt. Wenn der Abstreifer 4 nach oben hin verstellt wird, tauchen die Zinken 3 bei Drehung der Trommel 2 früher durch den Abstreifer 4 nach unten hin ab, wodurch der Förderweg für das Erntegut verkürzt wird; umgekehrt tauchen die Zinken 3 bei nach unten verschwenktem Abstreifer 4 später durch diesen nach unten ab, wodurch der Förderweg des Erntegutes verlängert wird. Diese Verstellbarkeit des Abstreifers 4 ermöglicht eine vereinfachte und flexible Anpassung der Aufnahmeeinheit 1 an weitere Fördereinrichtungen, die hier nicht dargestellt sind und die z.B. Teil eines Ladewagens oder einer Ballenpresse sind.

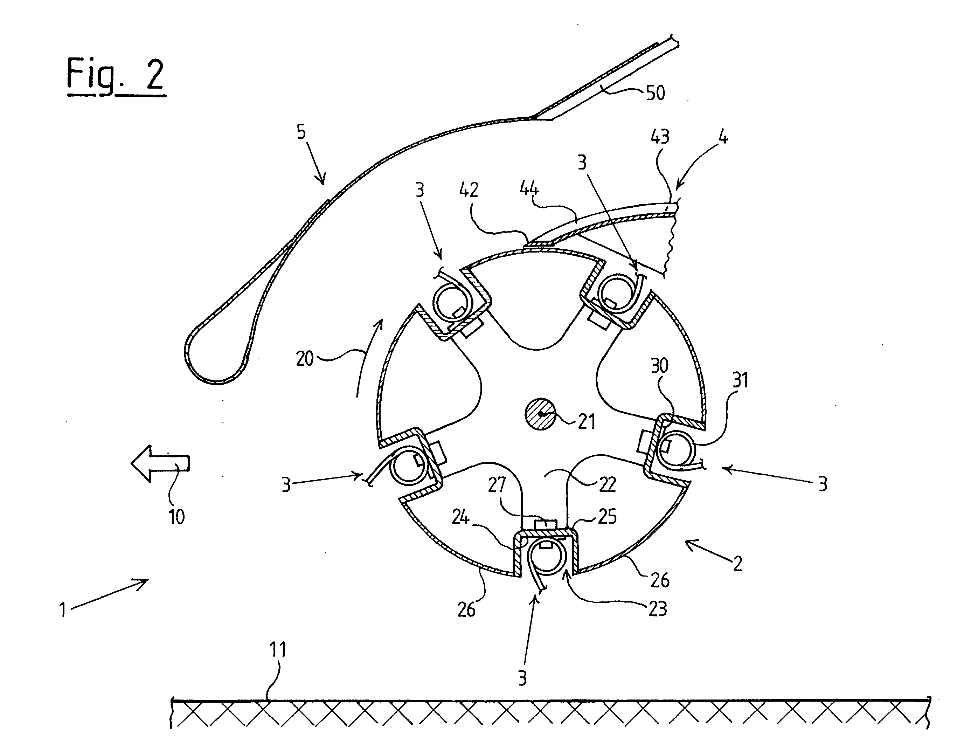

Gemäß Figur 2 umfaßt die hier dargestellte Aufnahmeeinheit 1 als wesentliche Teile ebenfalls eine Aufnahmetrommel 2, von der mehrere Zinken 3 nach außen vorragen, und einen mit den Aufnahmetrommel 2 zusammenwirkenden Abstreifer 4. Außerdem ist im vorliegenden Ausführungsbeispiel der Aufnahmeeinheit 1 vor und oberhalb der Aufnahmetrommel 2 eine Abdeckung 5 angeordnet.

Die Aufnahmetrommel 2 umfaßt neben ihrer Mittelachse 21 mehrere, d.h. zumindestens zwei auf diese aufgesetzte mehrarmige Naben 22. Im vorliegenden Ausführungsbeispiel sind die Naben 22, von denen hier eine sichtbar ist, fünfarmig ausgebildet. Am freien Ende jedes Armes der Nabe 22 ist in der Aufnahmetrommel 2 jeweils eine in deren Längsrichtung verlaufende Nut 23 ausgebildet. Die Nuten 23 werden durch U-Profile 25 gebildet, deren offene Seite nach außen weist. Zwischen je zwei benachbarten U-Profilen 25 ist jeweils ein Segment des Trommelmantels 26 angeordnet, wobei vorzugsweise die Segmente des Trommelmantels 26 mit den freien U-Schenkelenden der U-Profile 25 verbunden, z.B. verschweißt sind.

In jeder der Nuten 23 sind im seitlichen Abstand zueinander mehrere Zinken 3 angeordnet, wobei in Umfangsrichtung gesehen die Zinken 3 jeweils auf einer gemeinsamen Umfangslinie liegen. Jeder Zinken 3 besitzt einen Zinkenfuß 30, z.B. in Form einer rund gebogenen Öse, mittels welcher der Zinken 3 am Nutgrund 24 mit dem U-Profil 25 durch eine Befestigungsschraube 27 lösbar verbunden ist. Weiterhin besitzt jeder Zinken 3 einen schraubenlinienförmig gewundenen Zinkenabschnitt 31, der ein Mittel zur Federung der Zinken 3 bildet. Sowohl der Zinkenfuß 30 mit der Befestigungsschraube 27 als auch der gewundene Zinkenabschnitt 31 liegen jeweils im Inneren der Nut 23 ohne nach außen über den Trommelmantel 26 vorzuragen.

Die links oben in Figur 1 sichtbare Abdeckung 5 dient dazu, das unmittelbar über dem Boden 11 von den Zinken 3 aufgenommene Erntegut bei der weiteren Beförderung nach oben im Arbeitsbereich der Zinken 3 zu halten. Die Abdeckung 5 ist flexibel und besteht beispielsweise aus einem gewebeverstärkten Gummi- oder Kunststofftuch. Zur Halterung und Positionierung der Abdeckung 5 ist mindestens ein Abdeckungsträger 50 vorgesehen, der in nicht näher dargestellter Weise mit den übrigen Teilen der Aufnahmeeinheit 1 verbunden ist. Bei Bedarf kann der Abdekkungsträger 50 verstellbar ausgeführt sein, um die Stellung der Abdeckung 5 bedarfsgerecht wählen zu können.

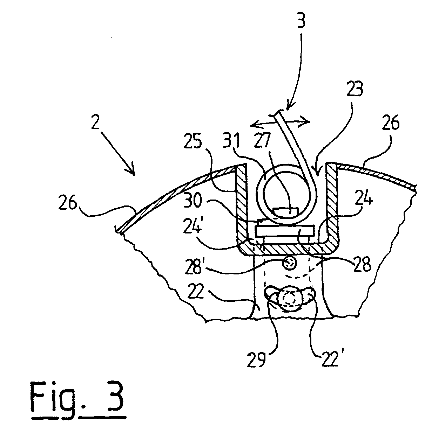

Figur 3 der Zeichnung zeigt eine Ausführung der Aufnahmeeinheit 1, bei der in Abwandlung der Ausführung nach Figur 2 die Zinken 3 individuell in ihrer Neigung relativ zur übrigen Aufnahmetrommel 2 verstellbar sind. Hierzu besitzt jeder Zinken 3 einen eigenen Zinkenhalter 28, der im vorliegenden Beispiel in Form eines Winkels ausgebildet ist. Die Zinken 3 und die zugehörigen Zinkenhalter 28 sind jeweils fest miteinander verbunden, hier verschraubt. Der äußere Schenkel des Zinkenhalters 28 verläuft parallel zum Nutgrund 24 der Nut 23. Der zweite, rechtwinklig zum ersten Schenkel verlaufende Schenkel des Zinkenhalters 28 läuft durch einen Schlitz 24' durch den Nutgrund hindurch in das Innere der Aufnahmetrommel 2. Mittels einer Schwenkachse 28' ist der Zinkenhalter 28 verschwenkbar an einer der Naben 22 gehaltert. Unterhalb der Schwenkachse 28' ist in dem hier sichtbaren Arm der Nabe 22 ein Bogenlangloch 22' vorgesehen, durch welches eine Befestigungsschraube 29 als Feststellschraube geführt ist. Im gelockerten Zustand dieser Schraube 29 kann der Zinkenhalter 28 zusammen mit dem Zinken 3 um die Schwenkachse 28 verschwenkt werden, wodurch sich eine Änderung der Neigung des Zinkens 3 relativ zur übrigen Aufnahmetrommel 2 im Sinne des am Zinken 3 eingezeichneten Doppelpfeils ergibt. Nach Einstellung einer gewünschten Neigung des Zinkens 3 kann durch Festdrehen der Befestigungsschraube 29 diese Neigung festgelegt werden. Insbesondere ist hierdurch ein einfaches Nachstellen der Zinken 3 möglich, wenn diese nach längerer Einsatzzeit nicht mehr ihre optimale Neigung relativ zur Trommel 2 aufweisen. In ihren übrigen Teilen, die hier nicht dargestellt sind, entspricht die Aufnahmetrommel 2 der Ausführung gemäß Figur 2.

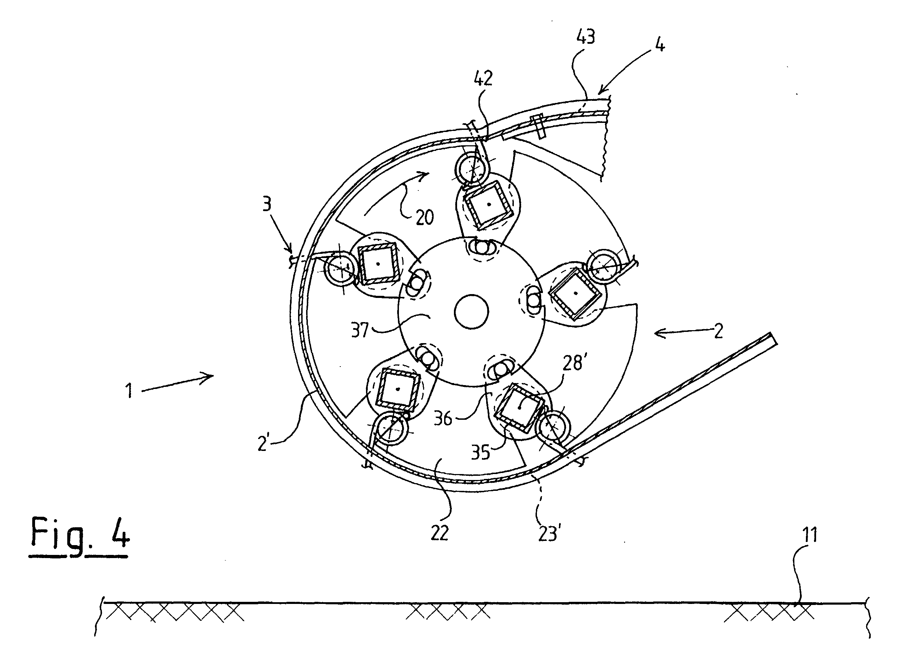

Figur 4 der Zeichnung zeigt ein Ausführungsbeispiel einer Aufnahmeeinheit 1, die sich im wesentlichen dadurch von den zuvor beschriebenen Ausführungsbeispielen unterscheidet, daß hier der Trommelmantel 2' von der Aufnahmetrommel 2 getrennt ist und feststehend ausgeführt ist. An seinem in Figur 4 oben liegenden Ende ist der Trommelmantel 2' mit dem Abstreifer 4 verbunden, wobei beide vorzugsweise einstückig miteinander ausgeführt sind. Dadurch ergibt sich insbesondere an der Vorderkante 42 des Abstreifers 4 ein sanfter und stetiger Übergang, der ein Festhalten von Erntegut ausschließt.

Die im Inneren des Trommelmantels 2' angeordneten, rotierenden Teile der Aufnahmetrommel 2 entsprechen in ihrer Gestaltung und Funktion denjenigen des Ausführungsbeispiels gemäß Figur 1, auf dessen Beschreibung hiermit verwiesen wird.

Um ein ungehindertes Umlaufen der Zinken 3 zu gewährleisten, ist der Trommelmantel 2' hier mit durchgehenden Durchlaufschlitzen 23' ausgeführt, die jeweils am oberen Ende des Trommelmantels 2' deckungsgleich in die Durchtrittsschlitze 43 des Abstreifers 4 übergehen. Da hierdurch der Trommelmantel 2' in einzelne, in Längsrichtung der Aufnahmetrommel 2 getrennte Bereiche unterteilt wird, erfolgt zweckmäßig eine Verbindung dieser Teile des Trommelmantels 2' außerhalb des Bewegungsbereiches der Zinken 3. Hierfür bietet sich insbesondere der untere, schräg nach rechts oben verlaufende Endbereich des Trommelmantels 2' an, da hier Durchlaufschlitze für die Zinken 3 nicht mehr freigehalten werden müssen.

## Patentansprüche

1. Aufnahmeeinheit (1) für Erntegut, insbesondere zur Verwendung an Ballenpressen oder Ladewagen, mit einer drehantreibbaren Aufnahmetrommel (2) und mit einem Abstreifer (4), mit den folgenden Merkmalen:
- die Aufnahmetrommel (2) weist einen Mantel (2', 26) auf, aus dem mehrere Zinken (3) nach außen vorragen, die fest mit dem übrigen Teil der Trommel (2) verbunden sind,
- der Abstreifer (4) ist kammartig mit Durchtrittsschlitzen (43) für die Zinken (3) ausgebildet und weist eine Oberseite mit einer im Querschnitt konvexen Wölbung auf,
- bei Ausführung der Aufnahmetrommel (2) mit einem mitdrehenden Mantel (26) verläuft der Abstreifer (4) im Bereich seiner Vorderkante (42) tangential zum Mantel (26),
- die Zinken (3) weisen relativ zu dem übrigen Teil der Trommel (2) eine gegen die Trommeldrehrichtung (20) weisende Neigung auf,
- die Neigung der Zinken (3) und die Wölbung des Abstreifers (4) sind so aufeinander abgestimmt, daß beim Durchtritt der Zinken (3) durch den Abstreifer (4) bei sich drehender Trommel (2) die Längsrichtung der Zinken (3) und die Fläche des Abstreifers (4) einen im wesentlichen rechten Winkel bilden,
- die Zinken (3) weisen ausgehend vom Trommelmantel (2', 26) zunächst einen geradlinigen Bereich (32') und anschließend in ihrem äußeren Endbereich (33') eine in Trommeldrehrichtung weisende Abbiegung oder Abwinklung auf,
- die Wölbung der Oberseite des Abstreifers (4) wird von seiner Vorderkante (42) in Richtung von der Trommel (2) weg stärker,
- der äußere Endbereich (33') der Zinken (3) ist gegen den geradlinigen Bereich (32') um einen Winkel zwischen 5 und 20°, vorzugsweise zwischen 10 und 15°, abgebogen oder abgewinkelt und
- der Abstreifer (4) ist an seinen die Durchtrittsschlitze (43) begrenzenden Kanten mit nach oben weisenden Randstegen (44) ausgebildet.

2. Aufnahmeeinheit nach Anspruch 1, **dadurch gekennzeichnet, daß** die Längsrichtung der Zinken (3) mit der Radialrichtung der Trommel (2) einen Winkel zwischen 25 und 45°, vorzugsweise zwischen 30 und 40°, bildet.

3. Aufnahmeeinheit nach einem der vorhergehenden Ansprüche, **dadurch gekennzeichnet, daß** der Trommelmantel (26) über seinen Umfang verteilt mehrere in Trommellängsrichtung laufende Nuten (23) aufweist und daß die Zinken (3) jeweils am oder nahe dem Nutgrund (24) mittels eines Zinkenfußes (30) festgelegt sind.

4. Aufnahmeeinheit nach Anspruch 3, **dadurch gekennzeichnet, daß** die Zinken (3) als Federzinken ausgebildet sind, wozu jeweils im Anschluß an den Zinkenfuß (30) ein schraubenförmig gewundener Zinkenabschnitt (31) vorgesehen ist, der innerhalb der Nut (23) liegt.

5. Aufnahmeeinheit nach Anspruch 3 oder 4, **dadurch gekennzeichnet, daß** die Nuten (23) durch nach außen offene U-Profile (25) gebildet sind.

6. Aufnahmeeinheit nach einem der Ansprüche 3 bis 5, **dadurch gekennzeichnet, daß** in Längsrichtung der Aufnahmetrommel (2) mehrere mehrarmige Naben (22) angeordnet sind, wobei jeweils ein Nabenarm zur zum Trommelinneren weisenden Unterseite einer der Nuten (23) läuft.

7. Aufnahmeeinheit nach Anspruch 5 oder 6, **dadurch gekennzeichnet, daß** der Trommelmantel (26) außerhalb der Nuten (23) durch mehrere Mantelsegmente gebildet ist, wobei je ein Mantelsegment zwischen zwei benachbarten U-Profilen (25) verläuft und an seinen Längskanten mit den freien Schenkelenden der U-Profile (25) verbunden ist.

8. Aufnahmeeinheit nach einem der Ansprüche 1 bis 6, **dadurch gekennzeichnet, daß** der Trommelmantel (2') feststehend und mit Durchlaufschlitzen (23') für die Zinken (3) ausgebildet ist.

9. Aufnahmeeinheit nach Anspruch 8, **dadurch gekennzeichnet, daß** der Trommelmantel (2') mit dem Abstreifer (4) verbunden oder einstückig ausgeführt ist und sich von dem Abstreifer (4) ausgehend gegen die Trommeldrehrichtung (20) über einen Umfangswinkel von mindestens 180° erstreckt.

10. Aufnahmeeinheit nach einem der vorhergehenden Ansprüche, **dadurch gekennzeichnet, daß** der Abstreifer (4) um seine Vorderkante (42) verschwenkbar und an seinem trommelfernen Ende höhenverstellbar und fixierbar gehaltert ist.

11. Aufnahmeeinheit nach einem der vorhergehenden Ansprüche, **dadurch gekennzeichnet, daß** die Zinken (3) lösbar mit der Aufnahmetrommel (2) verbunden, insbesondere verschraubt, sind.

12. Aufnahmeeinheit nach einem der vorhergehenden Ansprüche, **dadurch gekennzeichnet, daß** die Zinken (3) in ihrer Neigung verstellbar und relativ zur übrigen Aufnahmetrommel (2) in einer gewünschten Neigung festlegbar sind.

13. Aufnahmeeinheit nach Anspruch 1 oder 2, **dadurch gekennzeichnet, daß** in Längsrichtung der Aufnahmetrommel (2) gesehen die Zinken (3) einer Zinkenreihe jeweils auf einem gemeinsamen Zinkenträger (35) befestigt sind, der um seine Längsachse (28') verschwenkbar und in gewünschten Stellungen relativ zur übrigen Aufnahmetrommel (2) festlegbar ist.

14. Aufnahmeeinheit nach Anspruch 13, **dadurch gekennzeichnet, daß** alle Zinkenträger (35) mittels mindestens je eines Hebelarmes (36) mit mindestens einem gemeinsamen zentralen Verstellelement (37) verbunden sind, das relativ zur übrigen Trommel (2) begrenzt verdrehbar und in gewünschten Stellungen festlegbar ist.

15. Aufnahmeeinheit nach Anspruch 14, **dadurch gekennzeichnet, daß** das Verstellelement (37) mindestens eine Scheibe oder ein Ring ist, die/der konzentrisch in der Trommel (2) gelagert ist.

16. Aufnahmeeinheit nach einem der vorhergehenden Ansprüche, **dadurch gekennzeichnet, daß** vor und über der Aufnahmetrommel (2) in einem Abstand von den freien Enden der Zinken (3) eine von aufgenommenem Erntegut auslenkbare, vorzugsweise flexible Abdeckung (5) angeordnet ist.

## Claims

1. Pick-up unit (1) for crops, especially for use in connection with balers or trailers, with a rotarydriven pick-up reel (2) and tine cleaner (4), with
- the following characteristics:
the pick-up reel (2) has a mantle (2', 26) from which several tines (3) project outwards which are themselves fixed firmly to the remaining part of the reel (2);
- the tine cleaner (4) is comb-shaped with tine gaps (43) for the tines (3) and has an upper side with a convex cross section;
in the pick-up reel (2) version with a co-rotating mantle (26) the tine cleaner (4) is aligned in the vicinity of the leading edge (42) at a tangent with the mantle (26);
- the angle of inclination of the tines (3) relative to the rest of the drum (2) is against the direction of rotation of the drum (20);
- the angle of inclination of the tines (3) and convex profile of the tine cleaner (4) match each other such that the lengthwise direction of the tines (3) and the surface of the tine cleaner (4) are more or less at right angles with each other at the point where the tines (3) pass through the tine cleaner (4) when the reel (2) is rotating;
- the tines (3) are initially straight (32') as they project away from the reel mantle (2', 26) and then are curved or angled in the outermost extremity (33') in the direction of the rotation of the reel;
- the convex profile of the upper side of the tine cleaner (4) becomes more pronounced the further away from the reel (2) the tine cleaner (4) is beginning with the leading edge (42);
- the outer extremity (33') of the tines (3) is curved or angled against the straight portion (32') at an angle of between 5° and 20°, preferably between 10° and 15°, and
- the tine cleaner (4) is fitted with upward- facing edge supports (44) at the edges adjacent to the tine gaps (43).

2. Pick-up unit as per Claim 1 **characterized by** the fact that the lengthwise direction of the tines (3) form an angle between 25° and 45°, preferably between 30° and 40° with the notional radius of the reel (2).

3. Pick-up unit as per one of the preceding Claims **characterized by** the fact that the reel mantle (26) has several grooves (23) distributed over its circumference along the length of the reel and that the tines (3) are all fixed to or near to the base (24) of the groove by means of a tine mount (30).

4. Pick-up unit as per Claim 3 **characterized by** the fact that the tines (3) are formed as spring tines for which each tine (3) has a threaded section (31) in the form of a screw, which lies within the groove (23) and which is attached to the tine mount (30).

5. Pick-up unit as per Claim 3 or 4 **characterized by** the fact that the grooves (23) are formed as outward facing open U-shaped sections (25).

6. Pick-up unit as per one of the Claims 3 to 5 **characterized by** the fact that several multi-armed hubs (22) are arranged along the length of the pick-up reel (2) whereby each hub arm extends to the underside of one of the grooves (23) facing the reel interior.

7. Pick-up unit as per Claim 5 or 6 **characterized by** the fact that the reel mantle (26) is formed from several mantle segments outside the grooves (23) whereby each mantle segment is located between two adjacent U-shaped sections (25) and is connected along its lengthwise edges with the exposed sides of the U-shaped sections (25).

8. Pick-up unit as per one of the Claims 1 to 6 **characterized by** the fact that the reel mantle (2') is fixed and designed with tine gaps (23') for the tines (3).

9. Pick-up unit as per Claim 8 **characterized by** the fact that the reel mantle (2') is connected with the tine cleaner (4) or is designed as a single element and extends from the tine cleaner (4) against the direction of rotation of the reel (20) over an angle of at least 180°.

10. Pick-up unit as per one of the preceding Claims **characterized by** the fact that the tine cleaner (4) is pivotally mounted about the leading edge (42) and secured at the end remote from the reel where it can be fixed and the height can be adjusted.

11. Pick-up unit as per one of the preceding Claims **characterized by** the fact that the tines (3) are connected to and can be detached from the pick-up reel (2), in particular by means of a screwed fixing.

12. Pick-up unit as per one of the preceding Claims **characterized by** the fact that the angle of inclination of the tines (3) can be adjusted and can be fixed at a required angle relative to the rest of the pick-up reel (2).

13. Pick-up unit as per Claim 1 or 2 **characterized by** the fact that seen along the length of the pick-up reel (2) the tines (3) of a row of tines are all fixed on the same common tine bearer (35) which is pivotally mounted about its lengthwise axis (28') and can be fixed in required positions relative to the rest of the pick-up reel (2).

14. Pick-up unit as per Claim 13 **characterized by** the fact that all the tine bearers (35) are connected by means of at least one lever (36) with at least one common central adjustment device (37) which can be rotated to a limited degree relative to the rest of the reel (2) and can be fixed in required positions.

15. Pick-up unit as per Claim 14 **characterized by** the fact that the adjustment device (37) is at least one disc or ring which is borne concentrically in the reel (2).

16. Pick-up unit as per one of the preceding Claims **characterized by** the fact that before and above the pick-up reel (2) at a distance from the exposed ends of the tines (3) a preferably flexible cover (5) is fitted which can be deflected by the crop that has been picked up.

## Revendications

1. Unité de ramassage pour récoltes, en particulier pour l'utilisation sur des presses à balles ou des chariots chargeurs, comportant un tambour de ramassage (2) pouvant être entraîné en rotation et un racleur (4) et présentant les caractéristiques suivantes :
- le tambour de ramassage (2) comporte une enveloppe (2', 26) de laquelle plusieurs dents (3), qui sont reliées au reste du tambour (2), font saillie vers l'extérieur,
- le racleur (4) est réalisé sous la forme d'un peigne comportant des fentes de passage (43) pour les dents (3) et comporte une face supérieure présentant une voûte à section transversale convexe,
- dans le cas de la réalisation du tambour de ramassage (2) avec une enveloppe (26) qui tourne avec lui, le racleur (4) s'étend, dans la zone de son arête tangentielle (42), tangentiellement par rapport à l'enveloppe (26),
- les dents (3) présentent, par rapport à la partie restante du tambour (2), une inclinaison dirigée à l'encontre du sens de rotation du tambour (20),
- l'inclinaison des dents (3) et la voûte du racleur (4) sont déterminées l'une par rapport à l'autre de telle manière que, lorsque les dents (3) traversent le racleur (4) lors de la rotation du tambour (2), la direction longitudinale des dents (3) et la surface du racleur (4) forment sensiblement un angle droit,
- les dents (3) présentent, en partant de l'enveloppe du tambour (2', 26), tout d'abord une zone rectiligne (32') et, ensuite, dans leur zone terminale extérieure (33') une courbure ou un pliage dirigé dans le sens de rotation du tambour,
- la courbure de la face supérieure du racleur (4) est de plus en plus forte en partant de son arête antérieure(42) et en direction du tambour (2),
- la zone terminale extérieure (33') des dents (3) est courbée ou pliée par rapport à la zone rectiligne (32') d'un angle compris entre 5 et 20 °, de préférence entre 10 et 15 ° et
- le racleur (4) est conformé, sur ses arêtes délimitant les fentes de passage (43), avec des barrettes d'arête (44) dirigées vers le haut.

2. Unité de ramassage selon la revendication 1, **caractérisée en ce que** la direction longitudinale des dents (3) forme, avec la direction radiale du tambour (2), un angle compris entre 25 et 45 °, de préférence entre 30 et 40 °.

3. Unité de ramassage selon l'une quelconque des revendications précédentes, **caractérisée en ce que** l'enveloppe du tambour (26) comporte plusieurs encoches (23) qui s'étendent dans la direction longitudinale du tambour (2) et sont réparties sur sa périphérie et **en ce que** les dents (3) sont fixées, à chaque fois, sur ou à proximité du fond de l'encoche (24) au moyen d'un pied de dent (30).

4. Unité de ramassage selon la revendication 3, **caractérisée en ce que** les dents (3) sont réalisées sous la forme de doigts à ressort, ce pour quoi on prévoit, à chaque fois dans le raccordement au pied de dent (30), une section de doigt (31) qui est enroulée sous forme hélicoïdale et qui repose à l'intérieur de l'encoche (23).

5. Unité de ramassage selon la revendication 3 ou 4, **caractérisée en ce que** les encoches (23) sont constituées par des profilés en forme de "U" (25) ouverts vers l'extérieur.

6. Unité de ramassage selon l'une quelconque des revendications 3 à 5, **caractérisée en ce que** plusieurs moyeux à plusieurs bras (22) sont disposés dans la direction longitudinale du tambour de réception (2), un bras de moyeu se dirigeant, à chaque fois, vers la face inférieure dirigée vers l'intérieur du tambour d'une des encoches (23).

7. Unité de ramassage selon la revendication 5 ou 6, **caractérisée en ce que** l'enveloppe du tambour (26) est conformée, à l'extérieur des encoches (23), au moyen de plusieurs segments d'enveloppe, chaque segment d'enveloppe, à chaque fois, s'étendant entre deux profilés en "U" (25) voisins et étant relié, sur ses arêtes longitudinales, avec les extrémités libres des branches des profilés en forme de "U" (25).

8. Unité de ramassage selon l'une quelconque des revendications 1 à 6, **caractérisée en ce que** l'enveloppe de tambour (2') est fixe et est conformée avec des fentes de passage (23') pour les dents (3).

9. Unité de ramassage selon la revendications 8, **caractérisée en ce que** l'enveloppe de tambour (2') est reliée au racleur (4) ou forme une seule pièce avec ce dernier et s'étend, en partant du racleur (4), à l'encontre de la direction de rotation du tambour (20), sur un angle périphérique d'au moins 180 °.

10. Unité de ramassage selon l'une quelconque des revendications 1 à 9, **caractérisée en ce que** le racleur (4) est monté à pivotement autour de son arête antérieure (42) et est maintenu, sur son extrémité opposée au tambour, de manière à pouvoir être réglé en hauteur et à être fixé.

11. Unité de ramassage selon l'une quelconque des revendications précédentes, **caractérisée en ce que** les dents (3) sont reliées de manière amovible, en particulier par vissage, avec le tambour de ramassage (2).

12. Unité de ramassage selon l'une quelconque des revendications précédentes, **caractérisée en ce que** les dents (3) sont disposées avec une inclinaison réglable et peuvent être fixées, par rapport au reste du tambour de ramassage (2), avec une inclinaison désirée.

13. Unité de ramassage selon la revendication 1 ou 2, **caractérisée en ce que**, en regardant dans la direction longitudinale du tambour de ramassage (2), les dents (3) d'une rangée de dents sont, à chaque fois, fixées sur un support de dents commun (35) qui est monté à pivotement autour de son axe longitudinal (28') et qui peut être fixé dans des positions désirées par rapport au reste du tambour de ramassage (2).

14. Unité de ramassage selon la revendication 13, **caractérisée en ce que** tous les supports de dents (35) sont reliés, au moyen, à chaque fois, d'au moins un bras de levier (36), avec au moins un élément de réglage central commun (37) qui peut être fixé avec possibilité de rotation limitée et dans des positions désirées par rapport au reste du tambour (2).

15. Unité de ramassage selon la revendication 14, **caractérisée en ce que** l'élément de réglage (37) est constitué par au moins une rondelle ou un anneau qui est placé de manière concentrique dans le tambour (2).

16. Unité de ramassage selon l'une quelconque des revendications précédentes, **caractérisée en ce qu'**un couvercle (5), de préférence souple, qui peut être dévié par la récolte ramassée, est disposé devant et au dessus du tambour de ramassage (2) à distance des extrémités libres des dents (3).
